# EUROPÄISCHE PATENTSCHRIFT

(11) **EP 1 042 147 B1**
(45) Veröffentlichungstag und Bekanntmachung des Hinweises auf die Patenterteilung: **19.11.2003**
(21) Anmeldenummer: 99950620.7
(22) Anmeldetag: 05.10.1999
(51) Int. Cl.: B60S 1/52

(54) **DÜSENELEMENT FÜR EINE SCHEIBENWASCHANLAGE EINES KRAFTFAHRZEUGS**
NOZZLE ELEMENT FOR AN AUTOMOBILE WINDSHIELD WASHER SYSTEM
BUSE POUR UN SYSTEME LAVE-GLACE DE VEHICULE

(30) Priorität: 28.10.1998 DE 19849687
(43) Veröffentlichungstag der Anmeldung: 11.10.2000
(73) Patentinhaber: Valeo Wischersysteme GmbH, 74321 Bietigheim-Bissingen (DE)
(72) Erfinder: EGNER-WALTER, Bruno, D-74076 Heilbronn (DE); CAMPESATO, Bruno, D-74379 Ingersheim (DE); OEHLER, Gerhard, D-74392 Freudental (DE)
(74) Vertreter: Dreiss, Fuhlendorf, Steimle & Becker
(86) Internationale Anmeldenummer: EP9907373
(87) Internationale Veröffentlichungsnummer: WO00024616

(56) Entgegenhaltungen:
- DE-A- 3 142 224
- DE-A- 4 424 075
- GB-A- 725 328

## Beschreibung

Die Erfindung bezieht sich auf ein Düsenelement für eine Scheibenwaschanlage eines Kraftfahrzeugs, mit einem kugelartigen Grundkörper, der in einen zylindrischen Fortsatz übergeht, mit einem zentrischen Strömungskanal. Scheibenwaschanlagen gehören heute zur Standardausrüstung von Kraftfahrzeugen. Aus Kostengründen und auch wegen der leichten Verfügbarkeit wird als Spritz- bzw. Waschflüssigkeit Wasser verwendet. In der kalten Jahreszeit kann das Wasser allerdings einfrieren, weswegen man zumindest dann dem Wasser Zusätze, beispielsweise in Form von Spiritus und anderen leicht verflüchtigenden Stoffen hinzufügt. Es gibt auch Düsen mit Beheizung, jedoch ist hier ein relativ großer Aufwand notwendig.

Im Falle von Wasser mit einem leicht verflüchtigenden Zusatz muss dafür gesorgt werden, dass letzterer nicht verdunstet und als Folge davon die Düse einfriert. Es wurden deshalb sogenannte Gummilippenventile entwickelt, wie sie bspw. in der DE 39 35 318 A1 oder der DE 44 24 075 A1 beschrieben sind.

Der Nachteil dieser Gummilippenventile, die an sich das Verdunsten des Alkohols oder dergleichen sowie das Leerlaufen der Leitung gut verhindern, besteht darin, dass aus ihnen der Spritzstrahl relativ unkontrolliert austritt.

Es liegt infolgedessen die Aufgabe vor, ein Düsenelement gemäß dem oberbegriff des Anspruchs 1 so weiterzubilden, dass bei Erhaltung der Vorteile eines Gummilippenventils ein kontrollierter Strahl von der Düse an die Scheibe möglich ist.

Zur Lösung dieser Aufgabe wird erfindungsgemäß vorgeschlagen, dass das Düsenelement mit den Oberbegriffsmerkmalen die Kennzeichnungsmerkmale des Anspruchs 1 aufweist. Der im Oberbegriff erwähnte "kugelartige Grundkörper" wird in bekannter Weise in einen Düsenkörper bekannter Art eingerastet, der sich bspw. dem Prinzip nach aus den genannten Druckschriften ergibt, weswegen eine Darstellung im Rahmen der vorliegenden Erfindung sowie eine detaillierte Beschreibung entbehrlich sind.

Beim erfindungsgemäßen Düsenelement wird die Waschflüssigkeit über den zentrischen Strömungskanal zugeführt und sie gelangt dann über den wenigstens einen Querkanal an die Innenfläche der rohrförmigen gummielastischen Hülle. Bei Nichtgebrauch der Waschanlage oder bei geringem Flüssigkeitsdruck verschließt die gummielastische Hülle die Außenmündung des bzw. jedes Querkanals, so dass dort weder etwas verdunsten noch austreten kann. Wenn jedoch, bspw. mit Hilfe einer elektrischen, vom Fahrer bedienbaren Pumpe, ein genügend großer Druck in den Strömungskanal gegeben wird, so beult sich die gummielastische Hülle aus und die Flüssigkeit kann dann im Ringraum zwischen der Hülle und dem zylindrischen Fortsatz zum freien Endes des Düsenelements hin ausströmen. Im Gegensatz zu den flachen, unmittelbar aneinander anliegenden Lippen des bekannten Gummilippenventils, die einen flachen Strahl unbestimmter Querschnittsform erzeugen, tritt hier die Flüssigkeit geordnet in einem ringförmigen Strahl aus dem Düsenelement aus. Dadurch lässt sich dann auch im Falle eines einstellbar im Düsenkörper gelagerten Düsenelements die Strahlrichtung sicher einstellen und die Auftrefffläche an der Scheibe genau festlegen.

Wenn im kennzeichnenden Teil des Anspruchs 1 davon die Rede ist, dass die rohrförmige gummielastische Hülle etwa bis zum freien Ende des zylindrischen Fortsatzes reicht, so schließt dies die Möglichkeiten ein, entweder die Hülle wirklich bis zum freien Ende zu führen oder aber kurz davor endigen zu lassen oder evtl. ganz geringfügig auch noch über die freie Endfläche hinausragen zu lassen. Bei den gezeichneten Ausführungsbei-spielen ist die letztgenannte Alternative allerdings nicht vorgesehen.

Eine Weiterbildung der Erfindung ergibt sich aus Anspruch 2. Der dort beschriebene Ringwulst sichert in Verbindung mit der umlaufenden Ringnut des Düsenelements das sichere axiale Festhalten der gummielastischen Hülle auch bei größtmöglichem Flüssigkeitsdruck. Andererseits bewirkt sie eine Verstärkung des inneren Bereichs, insbesondere des inneren Endes der rohrförmigen gummielastischen Hülle, so dass beim normalen, weiter außen liegenden Mündungsbereich des oder der Querkanäle die Flüssigkeit nicht nach innen hin, sondern nach außen hin strömt.

Bevorzugterweise befindet sich die äußere Ringnut am Übergang vom kugelförmigen Grundkörper zum zylindrischen Fortsatz.

Eine bevorzugte Ausführungsform der Erfindung ist im Anspruch 4 beschrieben. Hierzu sind auch zwei Ausführungsbeispiele dargestellt und erläutert. Insbesondere durch das kegelstumpfartige freie Ende des zylindrischen Fortsatzes erreicht man eine Zentrierung des Sprühstrahls.

Eine weitere Verbesserung, nämlich Zentrierung und Führung des Sprühstrahls, erreicht man mit Hilfe der im Anspruch 5 beschriebenen Ausgestaltung. Der Sprühstrahl wird dabei gewissermaßen in eine Mehrzahl kleinerer Einzelstrahlen aufgeteilt, die durch entsprechende Formgebung und Kanalausbildung zusammengeführt werden und dann gebündelt auf der Scheibe auftreffen. Dies erhöht die Reinigungswirkung in Verbindung mit der Bewegung des Scheibenwischers.

Weitere diesbezügliche Ausbildungen sind in den Ansprüchen 6 und 7 beschrieben.

Eine andere, in der Zeichnung dargestellte und auch näher beschriebene Variante der Erfindung ergibt sich aus Anspruch 8. Sie erzeugt ebenfalls einen gerichteten, aus Einzelstrahlen zusammengesetzten Flüssigkeitsstrahl, der insgesamt breiter ist als derjenige der anderen Ausführungsformen und überall dort zur Anwendung kommen kann, wo ein größerer Strahldurchmesser gewünscht ist. In Abhängigkeit von der Ausbildung der Ausnehmungen kann man letzteren auch bei den vorerwähnten Varianten erreichen. Zweckmäßigerweise können die Kanäle der vorerwähnten dritten Variante geneigt verlaufen, wie dies die Zeichnung zum Ausdruck bringt.

Um bei einem einstellbaren Düsenelement die Einstellung leicht vornehmen zu können, ist gemäß Anspruch 12 vorgesehen, dass eine vorzugsweise koaxial zum Strömungskanal verlaufende, am freien Ende des zylindrischen Fortsatzes mündende Sackbohrung vorgesehen wird, in welche man ein Einstellwerkzeug einstecken kann, bspw. ein steifes Stück Draht, einen Nagel, Dorn oder dergleichen.

Weitere Ausgestaltungen, Vorteile und Wirkungsweisen dieser Erfindung ergeben sich aus der nachfolgenden Beschreibung von Ausführungsbeispielen. Die Zeichnung zeigt drei Ausführungsbeispiele der Erfindung. Hierbei stellen dar:
- Figuren 1 bis 3: Varianten des Düsenelements, jeweils in einem Längsmittelschnitt, wobei die zweite und dritte Variante gemäß Figuren 2 und 3 abgebrochen dargestellt sind;
- Figur 4: zeigt eine Ansicht des Düsenelements der Fig. 1;
- Figur 5: eine Ansicht des Düsenelements der Fig. 2; und
- Figur 6: eine Ansicht des Düsenelements der Fig. 3.

Das Düsenelement 1 ist Bestandteil einer nichtdargestellten, aber als solchen bekannten Scheibenwaschanlage eines Kraftfahrzeugs. Es weist einen kugelartigen Grundkörper 2 aus hartem Werkstoff, bspw. Metall, Kunststoff oder dergleichen auf, an welchem ein zylindrischer Fortsatz 3 angesetzt bzw. einstückig damit gefertigt ist. Der kugelartige Grundkörper 2 wird in ein Düsengehäuse 3 eingesetzt, bspw. eingeknüpft, welches dem Prinzip nach bekannt ist und deshalb in der Zeichnung lediglich mit einer strichpunktierten Linie angedeutet wird. An einem solchen Düsenkörper können ein oder mehrere Düsenelemente angebracht sein.

Bei den Ausführungsbeispielen hat der zylindrische Fortsatz 3 gemäß Fig. 4 bis 6 einen kreiszylindrischen Querschnitt und auf ihn ist eine schlauchförmige oder rohrförmige gummielastische Hülle 5 aufgezogen. Die Dimensionierungen sind so gewählt, dass die gummielastische Hülle 5 unter Vorspannung an die Zylinderwandung des Fortsatzes 3 angepresst wird.

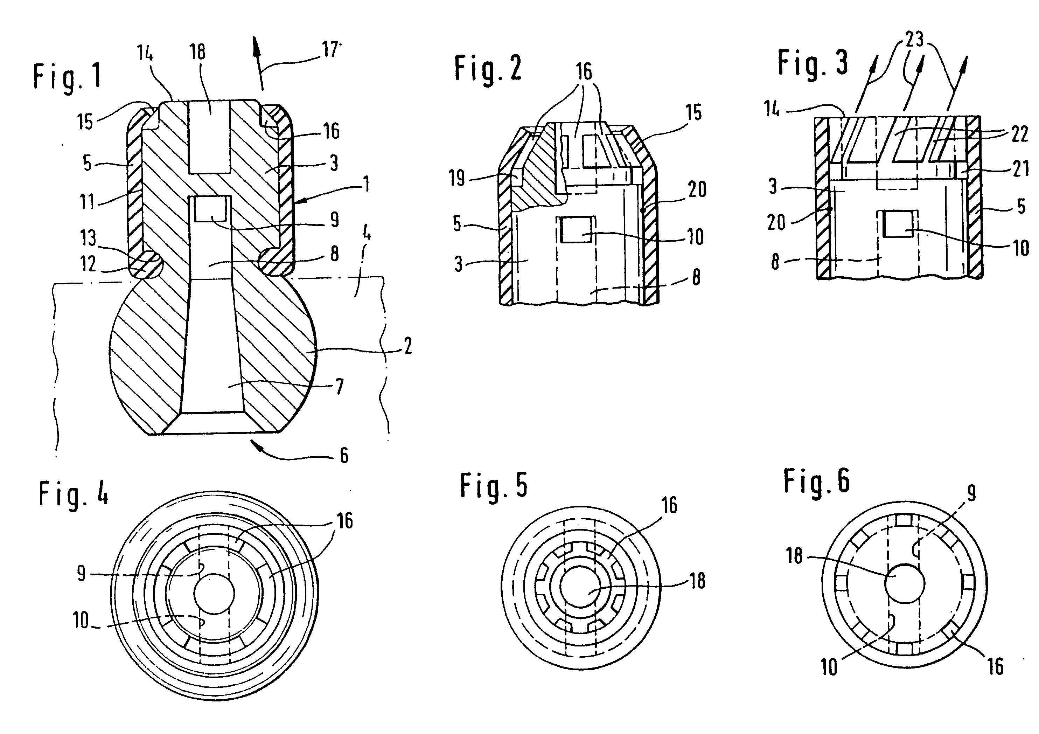

Am Düsenelement 1 ist ein zentrischer Strömungskanal 6 angebracht. Er durchsetzt den gesamten kugelartigen Grundkörper 2 und reicht bei den Ausführungsbeispielen bis etwa in die Mitte des zylindrischen Fortsatzes 3. Er besteht des Weiteren beim Ausführungsbeispiel aus einem sich konisch verjüngenden Kanalteil 7 und einem sich daran anschließenden, im Wesentlichen im zylindrischen Fortsatz 3 befindlichen zylindrischen Kanalteil 8. An seinem Außenende kann der konische Kanalteil 7 gemäß Fig. 1 fasenartig aufgeweitet sein.

In den inneren Endbereich des zylindrischen Kanalteils 8 münden beim Ausführungsbeispiel zwei um 180° versetzte Querkanäle 9 und 10. Sie endigen an gegenüberliegenden Stellen der zylindrischen Mantelfläche 11 des zylindrischen Fortsatzes 3. Beide werden durch die gummielastische Hülle 5 dicht verschlossen.

Die rohrförmige, gummielastische Hülle 5 ist an ihrem dem kugelartigen Grundkörper 2 zugewandten Ende mit einer radial nach innen gerichteten Ringwulst 12 ausgestattet, die in eine äußere umlaufende Ringnut 13 des zylindrischen Fortsatzes 3 eingesprengt ist. Beim Ausführungsbeispiel der Fig. 1 befindet sich diese Ringnut 13 unmittelbar am Übergang vom kugelartigen Grundkörper 2 zum zylindrischen Fortsatz 3.

Bei dem Ausführungsbeispiel nach den Fig. 1 und 2 ist das freie Ende des zylindrischen Fortsatzes 3 kegelstumpfförmig ausgebildet. Infolgedessen wird das freie Ende der gummielastischen Hülle 3 bei beiden Varianten aufgrund der Eigenspannung des Materials dem Kegelstumpf folgend nach innen hin umgebogen und es liegt auch dort noch unter, allerdings geringerer, Vorspannung an.

In beiden Fällen reicht das äußere Ende der gummielastischen Hülle 5 bis etwa an die bei beiden Varianten plane Endfläche 14. Im Gegensatz zu den Fig. 1 und 2 ist am freien Endbereich des zylindrischen Fortsatzes 3 bei der Variante gemäß Fig. 3 kein kegelstumpfförmiges Ende vorgesehen. Deshalb läuft auch die gummielastische Hülle 5 dort zylindrisch bis zur Endfläche 14.

Am Kegelstumpfmantel 15 sind bei den varianten nach den Fig. 1 und 2 mehrere, vorzugsweise gleichmäßig am Umfang verteilte Ausnehmungen 16 angebracht. Sie werden vom freien Ende der gummielastischen Hülle 5 nur teilweise übergriffen, und zwar an ihrem innen gelegenen Bereich, so dass die Flüssigkeit daraus im Sinne des Pfeils 17 ausströmen kann. Die Strahlrichtung und auch der Strahlquerschnitt jedes kleinen Teilstrahls kann durch entsprechende Gestaltung des zylindrischen Fortsatzes 3, der Ausnehmungen 16 und des freien Endes der gummielastischen Hülle 5 beeinflusst werden.

Um die Strahlrichtung genau einstellen zu können, ist am freien Ende des zylindrischen Fortsatzes 3 eine vorzugsweise koaxial zum Strömungskanal 6 verlaufende, von der planen Endfläche 14 ausgehende, weitere Sackbohrung 18 am zylindrischen Fortsatz 3 angebracht. Durch Einstecken eines Drahtendes, eines Dorns oder eines nagelartigen Gegenstandes kann bei einer drehbaren Lagerung des kugelartigen Grundkörpers 2 im Düsenkörper das Düsenelement 1 eingestellt werden.

Beim Ausführungsbeispiel gemäß Fig. 2 befindet sich etwa am Übergang vom zylindrischen Fortsatz 3 zu dessen Kegelstumpf 15 eine Ringnut 19. Die inneren oder in der Zeichnung unteren Enden der Ausnehmungen 16 haben mit dieser Ringnut 19 eine Strömungsverbindung.

Wenn der Druck im zentrischen Strömungskanal 6 und damit auch den Querkanälen 9 und 10 groß genug ist um die Anpresskraft der gummielastischen Hülle 5 an dem zylindrischen Fortsatz 3 zu überwinden, so tritt die Flüssigkeit über den auf diese Weise entstandenen Ringkanal 20 in die Ringnut 15 ein. Über die äußeren Enden der Ausnehmungen 16 treten eine deren Anzahl entsprechende Zahl kleiner Sprühstrahle im Sinne des Pfeils 17 aus. Sobald der Pumpendruck bzw., allgemein gesprochen, der Druck im zentrischen Strömungskanal 6 kleiner wird oder gar ganz entfällt, legt sich die gummielastische Hülle wieder dicht an die Austrittsenden der Querkanäle 9, 10 an und verschließt sie. Dadurch ist weder ein unbeabsichtigtes und unerwünschtes Leerlaufen noch ein Verdunsten der Flüssigkeit über das Düsenelement 1 möglich. Man verhindert dadurch auch ein Einfrieren der Düsenelemente und spart sich auf diese Weise eine Düsenheizung ein.

Beim Ausführungsbeispiel gemäß Fig. 3 ist am freien Endbereich des zylindrischen Fortsatzes 3 im Abstand von der freien Stirnfläche 14 eine Ringnut 21 angebracht. In sie tritt die Flüssigkeit wie bei den anderen Ausführungsbeispielen aus dem sich bei Überdruck bildenden Ringkanal 20 ein. In die Ringnut 21 münden die inneren Enden von mehreren, wiederum vorzugsweise gleichmäßig am Umfang verteilten Kanälen 22. Sie sind beim Ausführungsbeispiel geneigt zu den axialen Mantellinien des zylindrischen Fortsatzes 3 unter einem Winkel von bspw. 45° verlaufend. Infolgedessen treten die kleinen Flüssigkeitsströme im Sinne der Pfeile 23 aus. Man erreicht dadurch eine gewisse Aufspreizung des Strahls im Gegensatz zu den anderen Varianten, wo die kleinen Strahlen eher gegen die Scheibe hin zusammenlaufen.

## Patentansprüche

1. Düsenelement (1) für eine Scheibenwaschanlage eines Kraftfahrzeugs, mit einem kugelartigen Grundkörper (2), der in einen zylindrischen Fortsatz (3) übergeht, mit einem zentrischen Strömungskanal (6), **dadurch gekennzeichnet, dass** der Strömungskanal (6) als Sackbohrung ausgebildet ist, welche den kugelartigen Grundkörper (2) sowie einen anschließenden Teil des zylindrischen Fortsatzes (3) durchsetzt und in dessen inneres Ende wenigstens ein Querkanal (9, 10) mündet, der nach außen bis zum Mantel (11) des zylindrischen Fortsatzes (3) reicht, und dass auf den zylindrischen Fortsatz (3) eine rohrförmige, gummielastische Hülle (5) aufgezogen ist, welche alle Querkanalmündungen dicht verschließt, und die etwa bis zum freien Ende des zylindrischen Fortsatzes (3) reicht.

2. Düsenelement nach Anspruch 1, **dadurch gekennzeichnet, dass** die rohrförmige, gummielastische Hülle (5) an ihrem, dem kugelartigen Grundkörper (2) zugewandten Endbereich eine radial nach innen gerichtete Ringwulst (12) trägt, die in eine äußere umlaufende Ringnut (13) des zylindrischen Fortsatzes (3) eingreift.

3. Düsenelement nach Anspruch 2, **dadurch gekennzeichnet, dass** sich die äußer Ringnut (13) am Übergang vom kugelartigen Grundkörper (2) zum zylindrischen Fortsatz (3) befindet.

4. Düsenelement nach wenigstens einem der Ansprüche 1 bis 3, **dadurch gekennzeichnet, dass** das freie Ende des zylindrischen Fortsatzes (3) kegelstumpfartig ausgebildet ist und das äußere Ende der gummielastischen Hülle (5) den Kegelstumpf (15) wenigstens teilweise umfasst.

5. Düsenelement nach Anspruch 4, **dadurch gekennzeichnet, dass** am Kegelstumpfmantel (15) mehrere, insbesondere gleichmäßig am Umfang verteilte, Ausnehmungen (16) angebracht sind.

6. Düsenelement nach Anspruch 5, **dadurch gekennzeichnet, dass** die Ausnehmungen (16) vom äußeren, am Kegelstumpf (15) anliegenden Randbereich der gummielastischen Hülle (5) teilweise übergriffen sind.

7. Düsenelement nach Anspruch 5 oder 6, **dadurch gekennzeichnet, dass** etwa am Übergang vom zylindrischen Fortsatz (3) zu dessen Kegelstumpf (15) eine Ringnut (19) angebracht ist, die mit den inneren Enden der Ausnehmungen (16) in Strömungsverbindung steht.

8. Düsenelement nach wenigstens einem der Ansprüche 1 bis 3, **dadurch gekennzeichnet, dass** am freien Endbereich des zylindrischen Fortsatzes (3) im Abstand von der freien Stirnfläche (14) eine Ringnut (21) angebracht ist, in welche mehrere, insbesondere gleichmäßig am Umfang verteilte, Kanäle (22) münden, die bis zur freien Stirnfläche (14) des zylindrischen Fortsatzes (3) reichen.

9. Düsenelement nach Anspruch 8, **dadurch gekennzeichnet, dass** die Längsachse jedes Kanals (22) geneigt zur axialen Mantellinie des zylindrischen Fortsatzes (3) verläuft, insbesondere unter einem Winkel von etwa 30 bis 60°.

10. Düsenelement nach wenigstens einem der Ansprüche 1 bis 9, **dadurch gekennzeichnet, dass** der zentrische Strömungskanal (6) im Bereich des kugelartigen Grundkörpers (2) sich nach innen hin konisch verjüngend und im Bereich des zylindrischen Fortsatzes (3) zylindrisch ausgebildet ist.

11. Düsenelement nach wenigstens einem der Ansprüche 1 bis 10, **gekennzeichnet durch** zwei um 180° versetzte Querkanäle (9, 10) mit vorzugsweise quadratischem Querschnitt.

12. Düsenelement nach wenigstens einem der Ansprüche 1 bis 11, **gekennzeichnet durch** eine vorzugsweise koaxial zum Strömungskanal (6) verlaufende, am freien Ende des zylindrischen Fortsatzes mündende Einstell-Sackbohrung (18).

## Claims

1. A nozzle element (1) for a windshield wiper system of a motor vehicle, with a ball-like body (2) that transitions into a cylindrical projection (3) with a central flow channel (6), **characterized in that** the flow channel constructed as a blind aperture passing through the ball-shaped base body (2) and an adjacent part of the cylindrical projection (3), in which inner end at least one transverse channel (9, 10) discharges into, extending to an outer surface (11) of the cylindrical projection (3), and that onto the cylindrical projection (3) a tubular resilient sleeve (5) tightly closing off all the transverse channels and reaching substantially up to a free end of the cylindrical projection (3).

2. The nozzle element according to claim 1, **characterized in that** the tubular resilient sleeve (5) including an annular bead (12) at its end area located towards the ball-shaped base body (2) extending radially inward; and engageable within the outer circumferential annular groove (13) of the cylindrical projection (3).

3. The nozzle element according to claim 2, **characterized in that** the outer annular groove (13) is located at the transition from the ball-shaped base body (2) to the cylindrical projection (3).

4. The nozzle element according to at least one of claim 1 to 3, **characterized in that** the free end of the cylindrical projection (3) is a truncated cone and the outer end of the tubular resilient sleeve (5) engages at least partially the truncated cone (15).

5. The nozzle element according to claim 4, **characterized in that** the plurality of recesses (16) distributed preferably uniformly around a circumference of the truncated cone (15).

6. The nozzle element according to claim 5, **characterized in that** the recesses (16) are encircled in part by the outer edge part of the resilient sleeve (5) lying at the truncated cone (15).

7. The nozzle element according to claim 5 or 6, **characterized in that** an annular groove (19) is in fluid communication with the inner ends of the recesses (16) formed at the transition from the cylindrical projection (3) to its truncated cone (15).

8. The nozzle element according to at least one of claims 1 to 3, **characterized in that** at the free end of the cylindrical projection (3) an annular groove (19) spaced from the free end surface (14) is provided, into which a plurality of channels (22) discharge into, preferably distributed uniformly along a circumference of the cylindrical projection, extending to the free end surface (14) of the cylindrical projection (3).

9. The nozzle element according to claim 8, **characterized in that** the longitudinal axis of each channel (22) is inclined with respect to an axial center line of the cylindrical projection (3), preferably by an angle of about 30° to 60°.

10. The nozzle element according to at least one of claims 1 to 9, **characterized in that** the centered flow channel (6) is formed tapering conically inwards within the ball-shaped body (2) and is cylindrical within the cylindrical projection (3).

11. The nozzle element according to at least one of claims 1 to 10, **characterized by** two transverse channels (9, 10) offset by 180° with respect to one another having a square cross-section.

12. The nozzle element according to at least one of claims 1 to 10,**characterized by** a blind adjustment aperture (18) discharging into a free end of the cylindrical projection (3) and preferably running coaxial with respect to the flow channel (6).

## Revendications

1. Elément formant buse (1) pour un système lave-glace d'un véhicule automobile, avec un corps de base (2) du genre d'une sphère, se transformant en un prolongement (3) cylindrique, avec un canal d'écoulement (6) central, **caractérisé en ce que** le canal d'écoulement (6) est réalisé sous la forme de trou borgne qui traverse le corps de base du genre d'une sphère (2), ainsi qu'une partie adjacente du prolongement (3) cylindrique et à l'extrémité intérieure duquel débouche au moins un canal transversal (9, 10), qui s'étend vers l'extérieur jusqu'à l'enveloppe (11) du prolongement (3) cylindrique, et **en ce que**, sur le prolongement (3) cylindrique, est enfilée une gaine (5) ayant l'élasticité du caoutchouc, à forme tubulaire, qui ferme de façon étanche toutes les embouchures de canal transversal et qui s'étend à peu près jusqu'à l'extrémité libre du prolongement (3) cylindrique.

2. Elément formant buse selon la revendication 1, **caractérisé en ce que** la gaine (5) ayant l'élasticité du caoutchouc, à forme tubulaire, porte à sa zone d'extrémité, tournée vers le corps de base (2) du genre d'une sphère, un bourrelet annulaire (12) orienté radialement vers l'intérieur, qui s'engage dans une gorge annulaire (13) extérieure de pourtour du prolongement (3) cylindrique.

3. Elément formant buse selon la revendication 2, **caractérisé en ce que** la gorge annulaire (13) extérieure se trouve à la transition entre le corps de base (2) du genre d'une sphère et le prolongement (3) cylindrique.

4. Elément formant buse selon au moins l'une des revendications 1 à 3, **caractérisé en ce que** l'extrémité libre du prolongement (3) cylindrique est conformée en tronc de cône et l'extrémité extérieure de la gaine (5) ayant l'élasticité du caoutchouc entoure au moins partiellement le tronc de cône (15).

5. Elément formant buse selon la revendication 4, **caractérisé en ce qu'**une pluralité d'évidements (16), en particulier répartis régulièrement sur la périphérie, sont ménagés sur l'enveloppe de tronc de cône (15).

6. Elément formant buse selon la revendication 5, **caractérisé en ce que** les évidements (16) sont entourés partiellement par une zone de bordure extérieure, en appui sur le tronc de cône (15), de l'enveloppe (5) ayant l'élasticité du caoutchouc.

7. Elément formant buse selon la revendication 5 ou 6, **caractérisé en ce qu'**à peu près à la transition, entre le prolongement (3) cylindrique et son tronc de cône (15), est ménagée une gorge annulaire (19) qui est en liaison d'écoulement avec les extrémités intérieures des évidements (16).

8. Elément formant buse selon au moins l'une des revendications 1 à 3, **caractérisé en ce qu'**à la zone d'extrémité libre du prolongement (3) cylindrique, à distance de la face frontale (14) libre, est ménagée une gorge annulaire (21) dans laquelle débouchent une pluralité de canaux (22), en particulier répartis régulièrement à la périphérie et allant jusqu'à la face frontale (14) libre du prolongement (3) cylindrique.

9. Elément formant buse selon la revendication 8, **caractérisé en ce que** l'axe longitudinal de chaque canal (22) est incliné par rapport à la ligne d'enveloppe axiale du prolongement (3) cylindrique, en particulier sous un angle d'environ 30 à 60°.

10. Elément formant buse selon au moins l'une des revendications 1 à 9, **caractérisé en ce que** le canal d'écoulement (6) central, dans la zone du corps de base (2) cylindrique a une allure allant en s'effilant de façon conique lorsqu'on va vers l'intérieur et est cylindrique dans la zone du prolongement (3) cylindrique.

11. Elément formant buse selon au moins l'une des revendications 1 à 10, **caractérisé par** deux canaux transversaux (9, 10), décalés à 180°, ayant une section transversale, de préférence, carrée.

12. Elément formant buse selon au moins l'une des revendications 1 à 11, **caractérisé par** un trou borgne de réglage (18) débouchant à l'extrémité libre du prolongement cylindrique, s'étendant de préférence coaxialement par rapport au canal d'écoulement (6).
